# EUROPÄISCHE PATENTSCHRIFT

(11) **EP 2 453 332 B1**
(45) Veröffentlichungstag und Bekanntmachung des Hinweises auf die Patenterteilung: **08.01.2014**
(21) Anmeldenummer: 11004948.3
(22) Anmeldetag: 17.06.2011
(51) Int. Cl.: G05D 7/01, F24D 19/10

(54) **Strömungsmengenregler**
Flow regulator
Régulateur de débit

(30) Priorität: 10.11.2010 DE 102010050953
(43) Veröffentlichungstag der Anmeldung: 16.05.2012
(73) Patentinhaber: Oventrop GmbH & Co. KG, 59939 Olsberg (DE)
(72) Erfinder: Löffler, Gerhard, 59939 Olsberg (DE); Brambring, Stefan, 59939 Olsberg (DE)
(74) Vertreter: Köchling, Conrad-Joachim

(56) Entgegenhaltungen:
- EP-A1- 0 466 010
- EP-A1- 1 422 451
- DE-U1- 29 614 765

## Beschreibung

Die Erfindung betrifft einen Strömungsmengenregler für Heizungs- und/oder Kühlanlagen, die mit flüssigen oder gasförmigen Medien betrieben werden, der Anschlussstutzen für mindestens zwei voneinander getrennte Strömungswege aufweist, wobei im ersten Strömungsweg zwischen den Anschlussstutzen ein differenzdruckgesteuertes Stellglied mit einem ersten Kolben und einem mit dem ersten Kolben zusammenwirkenden Kolbenventilsitz angeordnet ist, welches in Abhängigkeit von der Strömungsmenge eine Hubbewegung des ersten Kolbens relativ zum Kolbenventilsitz bewirkt, wobei die Hubbewegung des ersten Kolbens auf einen im zweiten Strömungsweg befindlichen zweiten Kolben übertragen wird, der in einem Gehäuseteil des Strömungsmengenreglers geführt ist, welches Strömungsöffnungen aufweist, die abhängig von der Hubstellung des zweiten Kolbens überdeckt oder freigegeben sind, so dass die Strömungsmenge im zweiten Strömungsweg regelbar ist, wobei der erste Kolben über eine Membran mit einem Membrankolben abgedichtet beweglich in einer Gehäusekappe gehalten ist und der durch die Strömungsmenge im ersten Strömungsweg entstehende Differenzdruck über dem Kolbenventilsitz zwischen Einlaufseite und Auslaufseite über einen Kanal auf die gegenüber dem Strömungsweg abgedichtete Seite des Membrankolbens übertragen wird.

Ähnliche Strömungsmengenregler sind beispielsweise aus der DE 296 14 765 U 1 bekannt, wobei bei der bekannten Konstruktion der bei der Durchströmung des ersten Strömungsweges wirksame Eingangsdruck auf die Unterseite und der bei der Durchströmung wirksame Ausgangsdruck über eine Gehäusebohrung und einen durch eine die Membran umfassende Hülse und der Gehäusewandung liegenden Ringraum auf die Oberseite der Membrane geleitet wird. Zur Abdichtung der die Membran abdeckenden Kappe zum Gehäuse ist zusätzlich eine O-Ring-Abdichtung erforderlich. Die bekannten Strömungsmengenregler weisen des Weiteren einen differenzdruckgesteuerten Kolben auf, der passgenau in einer entsprechenden zylindrischen Ausnehmung sitzt und ein schlitzförmiges Fenster im Gehäuse je nach Hubstellung mehr oder weniger abdeckt. Die passgenaue Führung des Kolbens in der entsprechenden Gehäusebohrung ist über kleine Spalte realisierbar, die aber bei Verschmutzungen oder Kalkausfällungen zum Verklemmen und damit zum Festsitzen neigen.

Aus der EP 1 422 451 A1 ist eine ähnliche Ausgestaltung eines Strömungsmengenreglers bekannt. Hierbei ist aber der Zulaufstutzen des ersten Strömungsweges integraler Bestandteil der Gehäusekappe, die die Membran und den Membrankolben aufnimmt. Die Übertragung des Differenzdruckes erfolgt dabei ohne zusätzlichen Kanal direkt über den Zulaufkanal, eine Durchflusshülse und einen Ventilkegel 27 des Ventilgehäuses.

Eine solche Ausgestaltung ist zwar ebenfalls brauchbar, jedoch ist dabei eine besondere Ausgestaltung der Kappe samt Zulaufanschluss und eine gegenüber dem eingangs bezeichneten Stand der Technik andere Ausgestaltung des Gehäuses erforderlich. Da hierbei die Lage des Zulaufstutzens relativ zu dem Ventilgehäuse, welches den zugehörigen Ablaufstutzen aufweist, nicht fest definiert ist, sind Fehlinstallationen hinsichtlich der Ausrichtung der Stutzen durchaus möglich. Zudem ist die Fertigung hierdurch erschwert, weil die Kappe, die die Membran überdeckt, nicht nur den Anschlussstutzen für den Zulauf aufweisen muss, sondern zusätzlich noch der feste Kegel des Ventiles im Ventilgehäuse 11 angeordnet und ausgebildet sein muss.

Ausgehend von diesem Stand der Technik liegt der Erfindung die Aufgabe zugrunde, einen Strömungsmengenregler zu schaffen, der besonders kostengünstig zu fertigen ist und bei dem die Anzahl der erforderlichen Teile minimiert sind.

Zur Lösung dieser Aufgabe wird vorgeschlagen, dass der Kanal durch eine den ersten Kolben und den Membrankolben durchsetzende Bohrung gebildet ist, die über eine Querbohrung in die Auslaufseite mündet, und dass die Bohrung zentrisch zur Mittelachse des ersten Kolbens und des Membrankolbens verläuft und nahe einer Ankopplungsstelle eines mit dem zweiten Kolben verbundenen Stößels die Querbohrung senkrecht zur Bohrung verläuft.

Durch diese Ausbildung ist es nicht wie im Stand der Technik erforderlich, eine Schrägbohrung im Gehäuse auszubilden, was kostenungünstig ist, weil die Bearbeitungsrichtung nicht mehr mit der normalen Aufspannung des Elementes übereinstimmt. Zusätzlich ist es nicht erforderlich, eine zusätzliche Hülse zur Bildung eines Ringraumes anzuordnen und zu fixieren. Des Weiteren ist es nicht erforderlich, einen zusätzlichen O-Ring oder eine ähnliche Dichtung zwischen Kappe und Gehäuse vorzusehen. Durch die erfindungsgemäße Ausbildung ist es lediglich erforderlich, eine entsprechende Axialbohrung in den Kolben einzubringen und eine Querbohrung anzuordnen. Diese Maßnahmen, die hinsichtlich des ersten Kolbens und auch hinsichtlich des Membran-Kolbens einfach durchzuführen sind, verursachen keine großen Kosten. Hieraus resultiert auch, dass die bisher im Stand der Technik erforderliche Hülse zur Erzeugung eines Ringraumes überflüssig wird. Auch kann die Abdichtung der Abdeckkappe gegenüber dem Gehäuse vereinfacht werden.

Besonders bevorzugt ist vorgesehen, dass der Membrankolben über die gelochte Membran in einem ersten Endbereich derselben mit dem ersten Kolben dicht verbunden ist und die gelochte Membran in einem zweiten Endbereich zwischen der Gehäusekappe und einem Gehäuseteil, auf welchem die Gehäusekappe befestigt ist, dicht eingespannt ist.

Bei dieser entsprechenden Anordnung und Ausbildung kann anstelle des bisher im Stand der Technik notwendigen O-Ringes lediglich der Rand der gelochten Membran benutzt werden, so dass auf die zusätzliche Dichtung vollständig verzichtet werden kann, ohne dass hierdurch Nachteile in Kauf genommen werden müssten.

Um eine hohe Lebensdauer der Membran zu gewährleisten, ist zudem vorgesehen, dass die Membran jeweils in beiden Endbereichen umlaufende Membranwulste aufweist.

Mit diesen Membranwulsten erfolgt die Einspannung der Membran an den entsprechenden Teilen zum Zwecke der Fixierung und Dichtung.

Zudem ist bevorzugt vorgesehen, dass der erste Kolben von seinem dem Membrankolben zugewandten Ende zu seinem von diesem weg weisenden Ende konisch verjüngt ist, um je nach Stellung relativ zum Kolben-Ventilsitz einen unterschiedlichen definierten Strömungsquerschnitt zu bilden.

Schon durch diese geometrische Gestaltung wird ein Festsetzen des ersten Kolbens in dem Kolben-Ventilsitz vermieden oder zumindest diesem entgegengewirkt.

Um hierbei eine sichere Abdichtung in der Hubstellung zu gewährleisten, kann vorgesehen sein, dass der erste Kolben vor Beginn der konischen Verjüngung einen zylindrischen Abschnitt aufweist, der mit dem Kolben-Ventilsitz die Schließlage bildet.

Besonders bevorzugt ist zudem vorgesehen, dass der Kolben-Ventilsitz mindestens in dem Bereich, der mit dem ersten Kolben zusammenwirkt, aus einem Material besteht, das eine nur geringe oder gar keine Neigung zum Anhaften von Kalk hat.

Hierdurch wird ein Verklemmen und Festsetzen des ersten Kolbens in dem Kolben-Ventilsitz vermieden oder verhindert.

Besonders bevorzugt ist dazu vorgesehen, dass der Kolbenventilsitz aus PTFE besteht oder damit beschichtet ist.

Alternativ oder zusätzlich kann auch vorgesehen sein, dass der erste Kolben mit PTFE beschichtet ist oder aus diesem besteht.

Ein Ausführungsbeispiel der Erfindung ist in der Zeichnung dargestellt und im Folgenden näher beschrieben. Es zeigt:

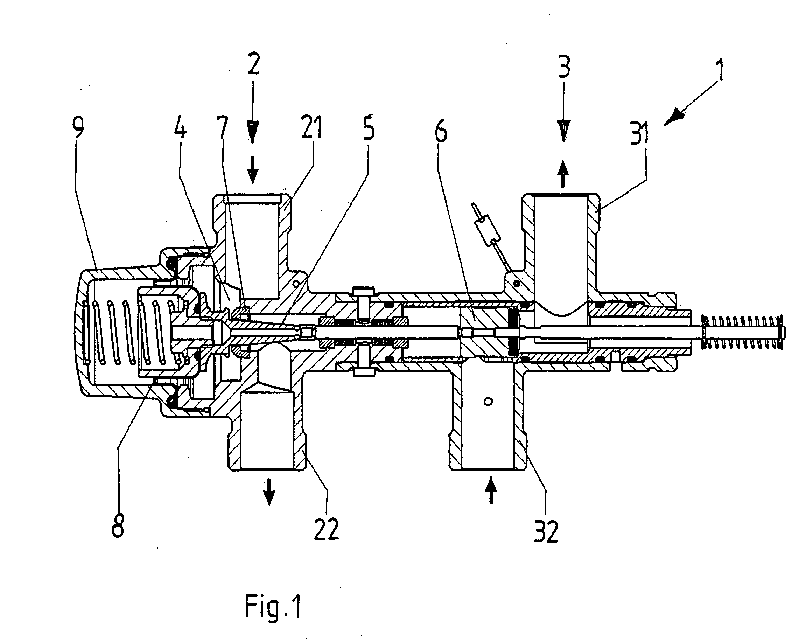

- Figur 1: einen erfindungsgemäßen Strömungsmengenregler im Mittelschnitt gesehen;

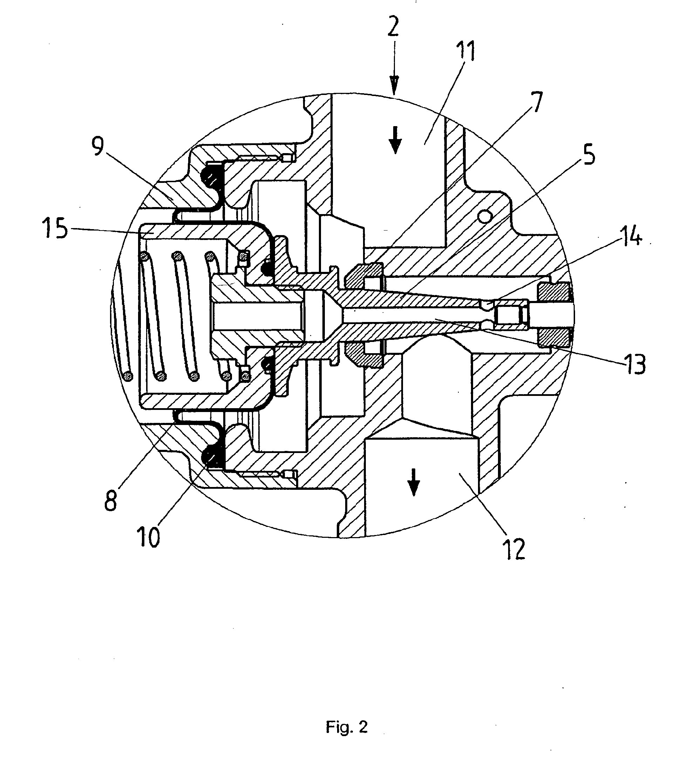

- Figur 2: ein vergrößertes Detail der Figur 1;
- Figur 3: eine nochmals vergrößerte Einzeleinheit in Schnittansicht.

In der Zeichnung ist ein Strömungsmengenregler 1 gezeigt, der ein Gehäuse aus üblichen Herstellungsmaterialien aufweist und der für Heizungs- und/oder Kühlanlagen bestimmt ist, die mit flüssigen oder gasförmigen Medien betrieben werden. Hierzu weist das Gehäuse des Strömungsmengenreglers 1 Anschluss-stutzen 21, 22 beziehungsweise 31,32 für mindestens zwei voneinander getrennte Strömungswege 2,3 auf. Im ersten Strömungsweg 2 ist zwischen den Anschlussstutzen 21,22 ein differenzdruckgesteuertes Stellglied 4 mit einem ersten Kolben 5 und einem mit dem ersten Kolben 5 zusammenwirkenden Kolben-Ventilsitz 7 angeordnet, welches im Abhängigkeit von der Strömungsmenge eine Hubbewegung des ersten Kolbens 5 relativ zum Kolbenventilsitz 7 bewirkt. Die Hubbewegung des ersten Kolbens 5 wird durch mechanische Koppelelemente, beispielsweise Stangen, auf einen im zweiten Strömungsweg 3 befindlichen zweiten Kolben 6 übertragen. Dieser Kolben 6 ist in einem Gehäuseteil des Strömungsmengenreglers 1 geführt, welches Strömungsöffnungen aufweist, die abhängig von der Hubstellung des zweiten Kolbens 6 mehr oder weniger überdeckt sind, so dass die Strömungsmenge im zweiten Strömungsweg 3 regelbar ist.

Der erste Kolben 5 ist über eine Membran 8 mit einem Membrankolben 15 abgedichtet und beweglich in einer Gehäusekappe 9 gehalten. Der durch die Strömungsmenge im ersten Strömungsweg 2 entstehende Differenzdruck über dem Kolben-Ventilsitz 7 zwischen Einlaufseite 11 und Auslaufseite 12 wird über einen Kanal auf die gegenüber dem Strömungsweg 2 abgedichtete Seite des Membrankolbens 15 übertragen. Erfindungsgemäß ist der Kanal durch eine den ersten Kolben 5 und den Membrankolben 15 durchsetzende Bohrung 13 gebildet, die über eine Querbohrung 14 in die Auslaufseite 12 mündet.

Vorzugsweise ist für eine kostengünstige Fertigung die Bohrung 13 zentrisch zur Mittelachse des ersten Kolbens 5 und des Membrankolbens 15 ausgerichtet. Nahe der Ankopplungsstelle eines mit dem zweiten Kolben 6 verbundenen Stößels ist die Querbohrung 14 senkrecht zur Bohrung 13 ausgerichtet angeordnet. Bevorzugt ist der Membrankolben über die gelochte Membran 8 in einem ersten Endbereich derselben mit dem Kolben 5 dicht verbunden und die gelochte Membran 8 ist einem zweiten Endbereich zwischen der Gehäusekappe 9 und einem Gehäuseteil, auf welchem die Gehäusekappe 9 befestigt ist, dicht eingespannt. Vorzugsweise weist die Membran 8 jeweils in beiden Endbereichen umlaufende Membranwulste 10 auf.

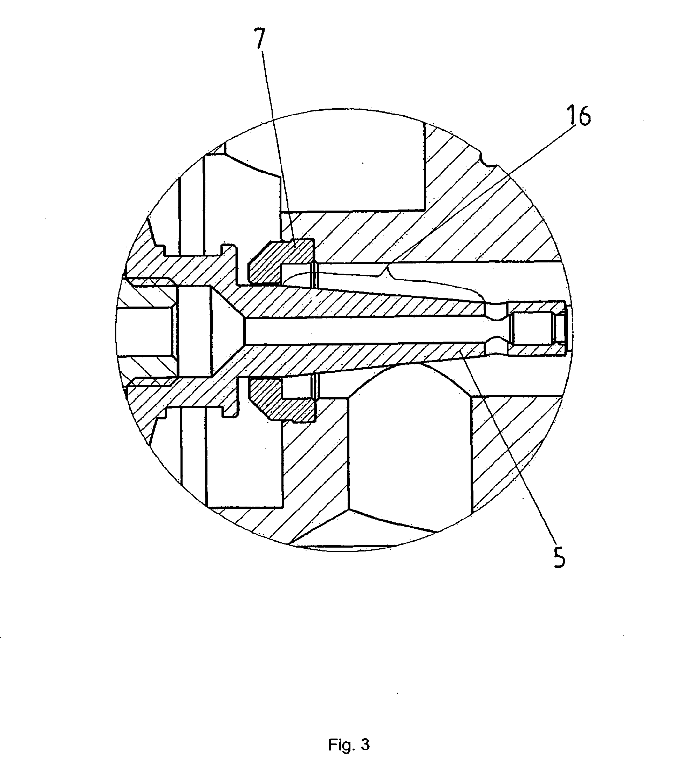

Wie insbesondere aus Figur 3 deutlich ersichtlich, ist der erste Kolben 5 von seinem dem Membrankolben 15 zugewandten Ende zu seinem von diesen wegweisenden Ende hin konisch verjüngt, so dass je nach Stellung relativ zum Kolben-Ventilsitz 7 ein kleinerer oder größerer definierter ringförmiger Strömungsquerschnitt gebildet wird.

Vorzugsweise ist die Ausbildung so vorgenommen, dass der erste Kolben 5 vor Beginn der konischen Verjüngung 16 einen zylindrischen Abschnitt aufweist, der mit dem Kolben-Ventilsitz 7 die Schließlage bildet. Der Kolben-Ventilsitz 7 ist ebenfalls zylindrisch ausgebildet, so dass die Teile passend ineinander sitzen (in der Schließlage), wie insbesondere in Figur 3 ersichtlich ist.

Der Kolben-Ventilsitz 7 ist mindestens in dem Bereich, der mit dem ersten Kolben 5 zusammenwirkt, aus einem Material gefertigt, das nur eine geringe oder gar keine Neigung zum Anhaften von Kalk hat. Vorzugsweise besteht demzufolge der Kolben-Ventilsitz 7 aus PTFE oder ist damit beschichtet.

Alternativ oder zusätzlich kann auch der erste Kolben 5 außenseitig mit PTFE beschichtet sein oder aus diesem bestehen.

Die Erfindung stellt einen Strömungsmengenregler zur Verfügung, der kostengünstig gefertigt werden kann, wobei gegenüber dem Stand der Technik eine Verringerung der Einzelteile erreicht wird und durch die entsprechende Anordnung von Bohrungen, achsparallel zu entsprechenden Gehäusebohrungen, ein Kostenvorteil bei der Fertigung erreicht wird. Zusätzlich wird auch ein Festsetzen des beweglicher ersten Kolbens 5 durch Kalkausfällungen oder Verschmutzungen vermieden.

## Patentansprüche

1. Strömungsmengenregler (1) für Heizungs- und/oder Kühlanlagen, die mit flüssigen oder gasförmigen Medien betrieben werden, der Anschlussstutzen (21,22; 31,32) für mindestens zwei voneinander getrennte Strömungswege (2;3) aufweist, wobei im ersten Strömungsweg (2) zwischen den Anschlussstutzen (21,22) ein differenzdruckgesteuertes Stellglied (4) mit einem ersten Kolben (5) und einem mit dem ersten Kolben (5) zusammenwirkenden Kolbenventilsitz (7) angeordnet ist, welches in Abhängigkeit von der Strömungsmenge eine Hubbewegung des ersten Kolbens (5) relativ zum Kolbenventilsitz (7) bewirkt, wobei die Hubbewegung des ersten Kolbens (5) auf einen im zweiten Strömungsweg (3) befindlichen zweiten Kolben (6) übertragen wird, der in einem Gehäuseteil des Strömungsmengenreglers (1) geführt ist, welches Strömungsöffnungen aufweist, die abhängig von der Hubstellung des zweiten Kolbens (6) überdeckt oder freigegeben sind, so dass die Strömungsmenge im zweiten Strömungsweg (3) regelbar ist, wobei der erste Kolben (5) über eine Membran (8) mit einem Membrankolben (15) abgedichtet beweglich in einer Gehäusekappe (9) gehalten ist und der durch die Strömungsmenge im ersten Strömungsweg (2) entstehende Differenzdruck über dem Kolbenventilsitz (7) zwischen Einlaufseite (11) und Auslaufseite (12) über einen Kanal auf die gegenüber dem Strömungsweg (2) abgedichtete Seite des Membrankolbens (15) übertragen wird, **dadurch gekennzeichnet, dass** der Kanal durch eine den ersten Kolben (5) und den Membrankolben (15) durchsetzende Bohrung (13) gebildet ist, die über eine Querbohrung (14) in die Auslaufseite (12) mündet, und dass die Bohrung (13) zentrisch zur Mittelachse des ersten Kolbens (5) und des Membrankolbens (15) verläuft und nahe einer Ankopplungsstelle eines mit dem zweiten Kolben (6) verbundenen Stößels die Querbohrung (14) senkrecht zur Bohrung (13) verläuft.

2. Strömungsmengenregler nach Anspruch 1, **dadurch gekennzeichnet, dass** der Membrankolben (15) über die gelochte Membran (8) in einem ersten Endbereich derselben mit dem ersten Kolben (5) dicht verbunden ist und die gelochte Membran (8) in einem zweiten Endbereich zwischen der Gehäusekappe (9) und einem Gehäuseteil, auf welchem die Gehäusekappe (3) befestigt ist, dicht eingespannt ist.

3. Strömungsmengenregler nach Anspruch 2, **dadurch gekennzeichnet, dass** die Membran (8) jeweils in beiden Endbereichen umlaufende Membranwulste (10) aufweist.

4. Strömungsmengenregler nach einem der Ansprüche 1 bis 3, **dadurch gekennzeichnet, dass** der erste Kolben (5) von seinem dem Membrankolben (15) zugewandten Ende zu seinem von diesem weg weisenden Ende konisch verjüngt ist, um je nach Stellung relativ zum Kolben-Ventilsitz (7) einen unterschiedlichen definierten Strömungsquerschnitt zu bilden.

5. Strömungsmengenregler nach Anspruch 4, **dadurch gekennzeichnet, dass** der erste Kolben (5) vor Beginn der konischen Verjüngung (16) einen zylindrischen Abschnitt aufweist, der mit dem Kolben-Ventilsitz (7) die Schließlage bildet.

6. Strömungsmengenregler nach einem der Ansprüche 1 bis 5, **dadurch gekennzeichnet, dass** der Kolben-Ventilsitz (7) mindestens in dem Bereich, der mit dem ersten Kolben (5) zusammenwirkt, aus einem Material besteht, das eine nur geringe oder gar keine Neigung zum Anhaften von Kalk hat.

7. Strömungsmengenregler nach Anspruch 6, **dadurch gekennzeichnet, dass** der Kolbenventilsitz (7) aus PTFE besteht oder damit beschichtet ist.

8. Strömungsmengenregler nach einem der Ansprüche 1 bis 7, **dadurch gekennzeichnet, dass** der erste Kolben (5) mit PTFE beschichtet ist oder aus diesem besteht.

## Claims

1. A flow regulator (1) for heating and/or cooling systems, which are operated with liquid or gaseous media, comprising connection pieces (21, 22; 31, 32) for at least two separate flow paths (2; 3), in the first flow path (2) between the connection pieces (21, 22) a differential pressure-controlled actuator (4) having a first piston (5) and a piston valve seat (7) cooperating with the first piston (5) being arranged, said actuator (4) causing, depending on the flow, a stroke movement of the first piston (5) relative to the piston valve seat (7), the stroke movement of the first piston (5) being transmitted to a second piston (6) in the second flow path (3), said second piston (6) being guided in a housing part of the flow regulator (1), which has flow openings, which, depending on the stroke position of the second piston (6), are closed or released, so that the flow rate in the second flow path (3) is controllable, the first piston (5) being movably held and sealed in a housing cap (9) by a diaphragm (8) having a diaphragm piston (15), and the differential pressure resulting from the amount of flow in the first flow path (2) across the piston valve seat (7) between the inlet side (11) and outlet side (12) being transmitted trough a channel on the side of the diaphragm piston (15) that is sealed against the flow path (2), **characterized in that** the channel is formed by a bore (13) penetrating the first piston (5) and the diaphragm piston (15), said bore (13) being open to the outlet side (12) by a transverse bore (14), and that the bore (13) extends centrically to the central axis of the first piston (5) and of the diaphragm piston (15), and the transverse bore (14) extends perpendicularly to the bore (13) close to a coupling point of a stem connected to the second piston (6).

2. The flow regulator according to claim 1, **characterized in that** the diaphragm piston (15) is sealingly connected through the perforated diaphragm (8) in a first end portion thereof to the first piston (5), and the perforated diaphragm (8) is sealingly fastened in a second end portion between the housing cap (9) and a housing part, on which the housing cap (3) is fixed.

3. The flow regulator according to claim 2, **characterized in that** the diaphragm (8) comprises circumferential rolling diaphragms (10) in each of the two end portions.

4. The flow regulator according to one of claims 1 to 3, **characterized in that** the first piston (5) is conically tapering from its end turned toward the diaphragm piston (15) to its end turned away therefrom, so to form, depending on the respective position relative to the piston valve seat (7), a different defined flow cross section.

5. The flow regulator according to claim 4, **characterized in that** before the start of the conical taper (16), the first piston (5) has a cylindrical portion that forms, together with the piston valve seat (7), the closing position.

6. The flow regulator according to one of claims 1 to 5, **characterized in that** the piston valve seat (7) is made, at least in the area coacting with the first piston (5), of a material having only a low or no tendency at all for the adherence of lime.

7. The flow regulator according to claim 6, **characterized in that** the piston valve seat (7) is made of PTFE or is coated therewith.

8. The flow regulator according to one of claims 1 to 7, **characterized in that** the first piston (5) is coated with PTFE or is made thereof.

## Revendications

1. Régulateur de débit (1) pour des systèmes de chauffage et/ou de refroidissement, qui fonctionnent avec des milieux liquides ou gazeux, comprenant des pièces de raccordement (21, 22; 31, 32) pour au moins deux voies d'écoulement (2; 3) séparées, dans la première voie d'écoulement (2) entre les pièces de raccordement (21, 22) un actionneur (4) commandé par la pression différentielle et ayant un premier piston (5) et un siège de tiroir à piston (7) coopérant avec le premier piston (5) étant aménagé, l'actionneur (4) provoquant, en fonction du niveau d'écoulement, un mouvement de levée du premier piston (5) par rapport au siège de tiroir à piston (7), le mouvement de levée du premier piston (5) étant transmis à un deuxième piston (6) dans la deuxième voie d'écoulement (3), le deuxième piston (6) étant guidé dans une partie de boîtier du régulateur de débit (1), qui a des orifices d'écoulement, qui, en fonction de la position de levée du deuxième piston (6), sont refermées ou libérées, de façon que le débit dans la deuxième voie d'écoulement (3) soit commandable, le premier piston (5) étant maintenu de façon mobile dans un capuchon de boîtier (9) et étanchéifié par une membrane (8) avec un piston de membrane (15), et la pression différentielle à cause du débit dans la première voie d'écoulement (2) à travers le siège de tiroir à piston (7) entre le côté d'entrée (11) et le côté de sortie (12) étant transmise par l'intermédiaire d'un canal au côté du piston de membrane (15), qui est étanchéifié par rapport à la voie d'écoulement (2), **caractérisé en ce que** le canal est réalisé par un alésage (13) traversant le premier piston (5) et le piston de membrane (15), cet alésage (13) étant ouvert au côté de sortie (12) par un alésage (14) transversal, et que l'alésage (13) s'étend centralement par rapport à l'axe central du premier piston (5) et du piston de membrane (15), et l'alésage (14) transversal s'étend perpendiculairement par rapport à l'alésage (13) près d'un point d'accouplement d'une tige reliée au deuxième piston (6).

2. Régulateur de débit selon la revendication 1, **caractérisé en ce que** le piston de membrane (15) est relié de manière étanche par l'intermédiaire de la membrane perforée (8) dans une première zone d'extrémité de celle-ci au premier piston (5), et la_membrane perforée (8) est fixée de façon étanche dans une deuxième zone d'extrémité entre le capuchon de boîtier (9) et une partie de boîtier, sur laquelle le capuchon de boîtier (3) est attaché.

3. Régulateur de débit selon la revendication 2, **caractérisé en ce que** la membrane (8) comprend des membranes roulantes (10) circonférentielles dans chacune des deux zones d'extrémités.

4. Régulateur de débit selon une des revendications 1 à 3, **caractérisé en ce que** le premier piston (5) est taillé en cône à partir de son extrémité, qui est tournée vers le piston de membrane (15), à son extrémité, qui est opposée à celui-ci, pour former, en fonction de la position respective par rapport au siège de tiroir à piston (7), une différente section transversale d'écoulement définie.

5. Régulateur de débit selon la revendication 4, **caractérisé en ce que** le premier piston (5) a devant le début de la partie en taille conique (16) une partie cylindrique, qui forme, ensemble avec le siège de tiroir à piston (7), la position de fermeture.

6. Régulateur de débit selon une des revendications 1 à 5, **caractérisé en ce que** le siège de tiroir à piston (7) au moins dans la zone coopérant avec le premier piston (5) est réalisé en une matière, qui a une faible tendance ou aucune tendance à l'adhérence de chaux.

7. Régulateur de débit selon la revendication 6, **caractérisé en ce que** le siège de tiroir à piston (7) est réalisé en PTFE ou est recouvert de celui-ci.

8. Régulateur de débit selon une des revendications 1 à 7, **caractérisé en ce que** le premier piston (5) est recouvert de PTFE ou est réalisé en celui-ci.
